# EUROPEAN PATENT APPLICATION

(11) **EP 3 892 416 A1**
(43) Date of publication of application: **13.10.2021**
(21) Application number: 19907499.8
(22) Date of filing: 30.05.2019
(51) Int. Cl.: B23K 35/30, B23K 9/18, B23K 103/04

(54) **WELDING WIRE FOR SUBMERGED ARC WELDING OF HIGH-MANGANESE LOW-TEMPERATURE STEEL, AND WELDING METHOD**

(30) Priority: 03.01.2019 CN 201910004208
(71) Applicant: Nanjing Iron & Steel Co., Ltd., Nanjing, Jiangsu 210035 (CN)
(72) Inventor: SUN, Chao, Nanjing, Jiangsu 210035 (CN); LI, DongHui, Nanjing, Jiangsu 210035 (CN); YIN, YuQun, Nanjing, Jiangsu 210035 (CN)
(74) Representative: Gong, Jinping
(86) International application number: PCT/CN2019/089359
(87) International publication number: WO 2020/140379

(57) **Abstract**

The invention discloses a welding wire for submerged arc welding of high-manganese low-temperature steel and a welding method, and relates to the technical field of welding. The welding wire is prepared from the following chemical components according to mass percent: 0.2% to 0.4% of C, 12% to 15% of Mn, 16% to 20% of Ni, 2% to 5% of Cr, less than or equal to 0.004% of P, less than or equal to 0.002% of S and the balance of Fe and inevitable impurities. The manganese-nickel composition design adopted by the welding wire has good compatibility with high-manganese low-temperature steel base metal and is suitable for a conventional welding wire manufacturing method, the composition is simple, weld metal formed by the welding wire has good impact toughness at low temperature of -196 DEG C, and the welding requirement of the high-manganese low-temperature steel for constructing equipment like a liquefied natural gas storage tank is preferably met.

## Description

### TECHNICAL FIELD

The present invention relates to the technical field of welding, particularly to a welding wire for submerged arc welding of high-manganese low-temperature steel and a welding method thereof.

### BACKGROUND ART

The storage and transport of substances like liquefied natural gas (the boiling point is -162 DEG C), liquid oxygen (the boiling point is -183 DEG C) and liquid nitrogen (the boiling point is -196 DEG C) require structural materials that provide service at low temperature. The main requirement for the mechanical properties of the structural materials is sufficient impact toughness at low temperature. As commonly used low-temperature steels, materials like 9%Ni steel and Cr-Ni austenitic stainless steel require addition of a large amount of expensive nickel element, resulting in a high cost. In recent years, high-manganese low-temperature steel as a new type of cutting-edge low-temperature material has received widespread attention, and it is also very important to develop special welding materials to match the high-manganese low-temperature steel.

The submerged arc welding method is widely used in the welding of liquefied natural gas storage tanks and other structures due to its high degree of automation, controllable welding quality and high welding efficiency. The manganese content of the high-manganese low-temperature steel is approximately 24%, and the structural type is austenite. In the absence of special welding wires matching the high-manganese low-temperature steel, the welding wires for 9%Ni steel are usually used as substitutes, such as ERNiCrMo-3 and ERNiCrMo-4. The nickel content of these welding materials is as high as 50% or more, so they are expensive. On the other hand, large differences between the base metal and the welding material in manganese and nickel contents are not favorable to the control of the structure and performance near the fusion line of the welded joints. As the development of high-manganese low-temperature steel is getting more mature, welding materials especially designed for high-manganese low-temperature steel have also appeared in recent years. Patent CN201710194206 discloses a full-automatic submerged-arc welding solid-core welding wire for high-manganese steel for preparing LNG storage tank, with a manganese content of 23% to 26%. Patent CN201710194314 discloses a gas metal arc welding weld wire suitable for working temperate being -196 DEG C, with a manganese content of 24% to 26%. South Korean POSCO has also developed a special high-manganese welding material for high-manganese steel, with a manganese content of approximately 22%. These high-manganese welding materials have an obvious advantage of a low alloy cost, but due to a high content of manganese, it is liable to forming toxic manganese volatilization during the welding process, and special welding equipment is required, adding difficulty to use.

### SUMMARY OF THE INVENTION

In order to solve the foregoing technical problem, the present invention provides a welding wire for submerged arc welding of high-manganese low-temperature steel, and the welding wire is prepared from the following chemical components according to mass percent: 0.2% to 0.4% of C, 12% to 15% of Mn, 16% to 20% of Ni, 2% to 5% of Cr, less than or equal to 0.004% of P, less than or equal to 0.002% of S and the balance of Fe and inevitable impurities.

Technical effects: The present invention adopts a composite alloy design of manganese and nickel to reduce the content of expensive elements such as nickel, thereby reducing the alloy cost of the welding wire; at the same time, the manganese element is controlled within a certain content to avoid an excessive manganese content forming toxic manganese volatilization during the welding process, thereby reducing the use difficulty of the welding wire. The manganese-nickel composition design adopted by the welding wire has good compatibility with high-manganese low-temperature steel base metal and is suitable for a conventional welding wire manufacturing method, the composition is simple, weld metal formed by the welding wire has good impact toughness at low temperature of -196 DEG C, and the welding requirement of the high-manganese low-temperature steel for constructing equipment like a liquefied natural gas storage tank is preferably met.

The present invention further defines the following technical solution:
Further, the welding wire is prepared from the following chemical components according to mass percent: 0.2% to 0.4% of C, 12% to 15% of Mn, 16% to 20% of Ni, 2% to 5% of Cr, less than or equal to 0.004% of P, less than or equal to 0.002% of S, 2% to 4% of W, 0.1% to 1.2% of Mo, 0.01% to 0.2% of Ti, 0.01% to 0.2% of Nb, 0.02% to 0.1% of N and the balance of Fe and inevitable impurities.

The foregoing welding wire for submerged arc welding of high-manganese low-temperature steel is prepared from the following chemical components according to mass percent: 0.29% of C, 14.1% of Mn, 17% of Ni, 3.1% of Cr, less than or equal to 0.004% of P, less than or equal to 0.002% of S and the balance of Fe and inevitable impurities.

The welding wire for submerged arc welding of high-manganese low-temperature steel is prepared from the following chemical components according to mass percent: 0.2% of C, 15% of Mn, 16% of Ni, 5% of Cr, less than or equal to 0.004% of P, less than or equal to 0.002% of S and the balance of Fe and inevitable impurities.

The welding wire for submerged arc welding of high-manganese low-temperature steel is prepared from the following chemical components according to mass percent: 0.4% of C, 12% of Mn, 20% of Ni, 2% of Cr, less than or equal to 0.004% of P, less than or equal to 0.002% of S and the balance of Fe and inevitable impurities.

The welding wire for submerged arc welding of high-manganese low-temperature steel is prepared from the following chemical components according to mass percent: 0.27% of C, 13.8% of Mn, 17.5% of Ni, 3% of Cr, 3.2% of W, 0.6% of Mo, 0.04% of Ti, 0.05% of Nb, 0.06% of N, less than or equal to 0.004% of P, less than or equal to 0.002% of S and the balance of Fe and inevitable impurities.

Another object of the present invention is to provide a welding method of the welding wire for submerged arc welding of high-manganese low-temperature steel, a welding wire with a diameter of 2mm to 4mm and a submerged arc welding method are adopted to weld a high-manganese low-temperature steel plate with a thickness of 15mm to 30mm and a manganese content of more than 20%, the groove is V-shaped, the welding current is 400A to 560A, the arc voltage is 25V to 32V, the single-side groove angle is 30°, the welding speed is 30cm/min to 55cm/min, and the weld heat input is 16kJ/cm to 23kJ/cm.

The present invention has the following beneficial effects:
(1) When being used in the welding of high-manganese low-temperature steel, the welding wire provided by the present invention reduces the cost by two thirds or more compared with existing high-nickel (the mass percent of nickel is 50% or more) welding materials, has an obvious cost advantage and can significantly reduce the welding cost of the high-manganese low-temperature steel for constructing equipment like a liquefied natural gas storage tank;
(2) The present invention adopts a chemical composition design of Mn and Ni as the main alloying elements to obtain a stable austenite structure. Ni can significantly improve the stability of austenite and does not easily form harmful carbides or weaken grain boundaries in the form of segregation. Further, Ni can also improve the low-temperature impact performance of welded joints. Ni is an ideal alloying element for low-temperature steel welding materials. However, Ni is expensive, and a large amount of addition will significantly increase the material cost. Therefore, it is considered to reduce the Ni content, but when the Ni content is too low, not only will it not have an enough effect on stabilizing austenite and also it will be unfavorable to improving the performance of the welded joints. Therefore, the Ni content in the welding wire provided by the present invention is controlled at 16% to 20%, which is reduced by more than two-thirds compared with the existing low-temperature steel high-Ni welding wires, greatly reducing the alloy cost;
(3) In the welding wire provided by the present invention, in order to compensate for the decrease in the stability of austenite caused by the decrease of the N element[d1], it is necessary to add other austenite-stabilizing alloying elements. As a very effective substitute for Ni, Mn also has a strong effect on stabilizing austenite and meanwhile can improve the strength of austenite by means of solid solution strengthening; in the welding wire provided by the present invention, Mn with a content of 12% or more and other elements can obtain a stable austenite structure, and can still keep the crystal structure stable at -196 DEG C; however, an excessive content of Mn tends to be segregated at the grain boundaries and weaken the grain boundaries, thereby reducing the low-temperature impact toughness. More importantly, if the Mn element is too high, it is liable to forming Mn vapor in a molten metal state, which will seriously damage the health of welding workers and cause environmental pollution; the results of the vacuum degassing experiment show that when the mass percent of Mn is 15% or less, the mass percent of Mn is reduced by not more than 0.2% after the welding wire metal in a molten state is degassed at a vacuum degree of 3 mbar for 10 minutes, and the volatilization phenomenon is not obvious, while when the mass percent of Mn is more than 22%, the Mn volatilization phenomenon is found to be serious after vacuum degassing treatment under the same conditions. When the Mn content is too high, the mass percent of Mn may decrease by more than 1%; therefore, the present invention controls the Mn content to 15% or less, which can significantly reduce the Mn volatilization of the molten metal during the welding process, and improve the usability of the welding wire; at the same time, compared with the existing welding wire designed with a high-nickel composition, the medium-and-high manganese composition design adopted by the present invention is closer to the chemical composition of the base metal of high manganese steel, thereby lowering the manganese element concentration gradient of the welded joints, reducing the structure and performance changes near the welding fusion line and leading to good composition compatibility between the welding wire and the base metal;
(4) In the welding wire provided by the present invention, Cr can also reduce the martensite transformation temperature and meanwhile can produce a solid solution strengthening effect. A content of 2% or more can generate an effect in the welding wire, but when the content of Cr is more than 5%, it is liable to forming precipitation of coarse carbides at the grain boundaries and reducing the strength of the grain boundaries, thereby reducing the impact toughness;
(5) In the welding wire provided by the present invention, C has an effect on significantly reducing the martensite transformation temperature and improving the stability of austenite, and has a significant solid solution strengthening effect, but an excessive content will lead to an excessive strengthening effect and precipitation of coarse carbides, thereby reducing the impact toughness. Therefore, the present invention controls the C content in an optimum range of 0.2% to 0.4%;
(6) The present invention strictly controls the content of P and S. The segregation of these two elements at the grain boundaries will cause liquefaction cracks and reheat cracks in the weld metal, which will seriously reduce the low-temperature impact toughness of the weld metal and welded joints. S will also form MnS with Mn, deteriorating the mechanical properties of the weld metal. Therefore, it is required in the present invention that the content of P be less than or equal to 0.004% and the content of S be less than or equal to 0.002% to reduce the adverse effects of these two elements on the weld metal;
(7) In the present invention, when the weld metal mainly composed of an austenite phase is solidified, in order to reduce the tendency of solidification cracks, 2% to 4% of W is added to narrow the solidification temperature range and lessen the tendency of solidification cracks; in order to suppress precipitation of coarse carbides at the grain boundaries, 0.1% to 1.2% of Mo is added, which is also favorable to improving the strength of the weld metal; the addition of 0.01% of 0.2% of Ti can hinder the coarsening of grains during thermal cycling, thereby reducing the grain size and improving the mechanical properties of the weld metal; in order to improve the performance of the weld metal, 0.01% to 0.2% of Nb can be added to form fine and dispersed carbide precipitation. While improving the strength, it is also favorable to refining the grains, thereby improving the low-temperature toughness; in addition, the addition of 0.02% to 0.1% of nitrogen can have a solid solution strengthening effect to improve the mechanical properties of the weld metal;
(8) The impact absorbed energy of the V-shaped sample of the weld metal formed by the welding wire designed by the present invention in the -196 DEG C Charpy pendulum impact test is more than or equal to 34J.

### DETAILED DESCRIPTION

### Embodiment 1

This embodiment provides a welding wire for submerged arc welding of high-manganese low-temperature steel, and the welding wire is prepared from the following chemical components according to mass percent: 0.29% of C, 14.1% of Mn, 17% of Ni, 3.1% of Cr, less than or equal to 0.004% of P, less than or equal to 0.002% of S and the balance of Fe and inevitable impurities.

The welding method of the welding wire is as follows: A welding wire with a diameter of 2.4mm and a submerged arc welding method are used to weld a high-manganese low-temperature steel plate with a thickness of 21mm and a Mn content of 23.8%. The groove of the high-manganese low-temperature steel plate is V-shaped, the single-side groove angle is 30°, the flux is INCOFLUX9 (SMC), the welding current is 410A, the arc voltage is 27V, the welding speed is 34cm/min, and the weld heat input is 18kJ/cm.

The impact absorbed energy KV₂ of the V-shaped sample of the weld metal formed by the welding wire in the -196 DEG C Charpy pendulum impact test (national standard GB/T229--2007) was 69J, the microstructure of the weld metal was austenite, there were no solidification cracks and reheat cracks, and the requirement of the high-manganese low-temperature steel used to construct equipment like a liquefied natural gas storage tank for low-temperature toughness of the weld metal was met.

### Embodiment 2

This embodiment provides a welding wire for submerged arc welding of high-manganese low-temperature steel, and the welding wire is prepared from the following chemical components according to mass percent: 0.2% of C, 15% of Mn, 16% of Ni, 5% of Cr, less than or equal to 0.004% of P, less than or equal to 0.002% of S and the balance of Fe and inevitable impurities.

The welding method of the welding wire is as follows: A welding wire with a diameter of 4mm and a submerged arc welding method are used to weld a high-manganese low-temperature steel plate with a thickness of 18mm and a Mn content of 24%. The groove of the high-manganese low-temperature steel plate is V-shaped, the single-side groove angle is 30°, the flux is INCOFLUX9 (SMC), the welding current is 550A, the arc voltage is 30V, the welding speed is 51cm/min, and the weld heat input is 19kJ/cm.

The impact absorbed energy KV₂ of the V-shaped sample of the weld metal formed by the welding wire in the -196 DEG C Charpy pendulum impact test (national standard GB/T229--2007) was 46J, the microstructure of the weld metal was austenite, there were no solidification cracks and reheat cracks, and the requirement of the high-manganese low-temperature steel used to construct equipment like a liquefied natural gas storage tank for low-temperature toughness of the weld metal was met.

### Embodiment 3

This embodiment provides a welding wire for submerged arc welding of high-manganese low-temperature steel, and the welding wire is prepared from the following chemical components according to mass percent: 0.4% of C, 12% of Mn, 20% of Ni, 2% of Cr, less than or equal to 0.004% of P, less than or equal to 0.002% of S and the balance of Fe and inevitable impurities.

The welding method of the welding wire is as follows: A welding wire with a diameter of 2.4mm and a submerged arc welding method are used to weld a high-manganese low-temperature steel plate with a thickness of 25mm and a Mn content of 22.5%. The groove of the high-manganese low-temperature steel plate is V-shaped, the single-side groove angle is 30°, the flux is INCOFLUX9 (SMC), the welding current is 430A, the arc voltage is 30V, the welding speed is 37cm/min, and the weld heat input is 21kJ/cm.

The impact absorbed energy KV₂ of the V-shaped sample of the weld metal formed by the welding wire in the -196 DEG C Charpy pendulum impact test (national standard GB/T229--2007) was 77J, the microstructure of the weld metal was austenite, there were no solidification cracks and reheat cracks, and the requirement of the high-manganese low-temperature steel used to construct equipment like a liquefied natural gas storage tank for low-temperature toughness of the weld metal was met.

### Embodiment 4

This embodiment provides a welding wire for submerged arc welding of high-manganese low-temperature steel, and the welding wire is prepared from the following chemical components according to mass percent: 0.27% of C, 13.8% of Mn, 17.5% of Ni, 3% of Cr, 3.2% of W, 0.6% of Mo, 0.04% of Ti, 0.05% of Nb, 0.06% of N, less than or equal to 0.004% of P, less than or equal to 0.002% of S and the balance of Fe and inevitable impurities.

The welding method of the welding wire is as follows: A welding wire with a diameter of 2.4mm and a submerged arc welding method are used to weld a high-manganese low-temperature steel plate with a thickness of 21mm and a Mn content of 23.8%. The groove of the high-manganese low-temperature steel plate is V-shaped, the single-side groove angle is 30°, the flux is INCOFLUX9 (SMC), the welding current is 405A, the arc voltage is 27V, the welding speed is 34cm/min, and the weld heat input is 18kJ/cm.

The impact absorbed energy KV₂ of the V-shaped sample of the weld metal formed by the welding wire in the -196 DEG C Charpy pendulum impact test (national standard GB/T229--2007) was 86J, the microstructure of the weld metal was austenite, there were no solidification cracks and reheat cracks and the requirement of the high-manganese low-temperature steel used to construct equipment like a liquefied natural gas storage tank for low-temperature toughness of the weld metal was met.

The present invention provides a low-cost, user-friendly welding wire for submerged arc welding of high-manganese low-temperature steel. The weld metal formed by the welding wire has excellent impact toughness at low temperature, and the welding requirement of the high-manganese low-temperature steel for constructing equipment like a liquefied natural gas storage tank is preferably met.

In addition to the foregoing embodiments, the present invention may also have other embodiments. All the technical solutions formed by adopting identical replacements or equivalent transformations fall in the scope of protection required by the present invention.

## Claims

1. A welding wire for submerged arc welding of high-manganese low-temperature steel, wherein the welding wire is prepared from the following chemical components according to mass percent: 0.2% to 0.4% of C, 12% to 15% of Mn, 16% to 20% of Ni, 2% to 5% of Cr, less than or equal to 0.004% of P, less than or equal to 0.002% of S and the balance of Fe and inevitable impurities.

2. The welding wire for submerged arc welding of high-manganese low-temperature steel according to claim 1, wherein the welding wire is prepared from the following chemical components according to mass percent: 0.2% to 0.4% of C, 12% to 15% of Mn, 16% to 20% of Ni, 2% to 5% of Cr, less than or equal to 0.004% of P, less than or equal to 0.002% of S, 2% to 4% of W, 0.1% to 1.2% of Mo, 0.01% to 0.2% of Ti, 0.01% to 0.2% of Nb, 0.02% to 0.1% of N and the balance of Fe and inevitable impurities.

3. The welding wire for submerged arc welding of high-manganese low-temperature steel according to claim 1, wherein the welding wire is prepared from the following chemical components according to mass percent: 0.29% of C, 14.1% of Mn, 17% of Ni, 3.1% of Cr, less than or equal to 0.004% of P, less than or equal to 0.002% of S and the balance of Fe and inevitable impurities.

4. The welding wire for submerged arc welding of high-manganese low-temperature steel according to claim 1, wherein the welding wire is prepared from the following chemical components according to mass percent: 0.2% of C, 15% of Mn, 16% of Ni, 5% of Cr, less than or equal to 0.004% of P, less than or equal to 0.002% of S and the balance of Fe and inevitable impurities.

5. The welding wire for submerged arc welding of high-manganese low-temperature steel according to claim 1, wherein the welding wire is prepared from the following chemical components according to mass percent: 0.4% of C, 12% of Mn, 20% of Ni, 2% of Cr, less than or equal to 0.004% of P, less than or equal to 0.002% of S and the balance of Fe and inevitable impurities.

6. The welding wire for submerged arc welding of high-manganese low-temperature steel according to claim 2, wherein the welding wire is prepared from the following chemical components according to mass percent: 0.27% of C, 13.8% of Mn, 17.5% of Ni, 3% of Cr, 3.2% of W, 0.6% of Mo, 0.04% of Ti, 0.05% of Nb, 0.06% of N, less than or equal to 0.004% of P, less than or equal to 0.002% of S and the balance of Fe and inevitable impurities.

7. A welding method of the welding wire for submerged arc welding of high-manganese low-temperature steel, wherein a welding wire with a diameter of 2mm to 4mm and a submerged arc welding method are adopted to weld a high-manganese low-temperature steel plate with a thickness of 15mm to 30mm and a Mn content of more than 20%, the groove is V-shaped, the welding current is 400A to 560A, the arc voltage is 25V to 32V, the single-side groove angle is 30°, the welding speed is 30cm/min to 55cm/min, and the weld heat input is 16kJ/cm to 23kJ/cm.
